Europäisches Patentamt

European Patent Office

Office européen des brevets

(19)

(11) Publication number: **0 080 626**
**B1**

# (12) EUROPEAN PATENT SPECIFICATION

(45) Date of publication of patent specification: **08.06.88**

(51) Int. Cl.⁴: **G 06 F 12/06**

(21) Application number: **82110396.7**

(22) Date of filing: **11.11.82**

(54) **Memory module selection and reconfiguration apparatus in a data processing system.**

(30) Priority: **24.11.81 IT 2526681**

(43) Date of publication of application:
**08.06.83 Bulletin 83/23**

(45) Publication of the grant of the patent:
**08.06.88 Bulletin 88/23**

(84) Designated Contracting States:
**DE FR GB**

(56) References cited:
**US-A-3 813 652**
**US-A-3 958 222**
**US-A-4 001 786**

**IBM TECHNICAL DISCLOSURE BULLETIN, vol.
16, no. 1, June 1973, pages 67-68, New York,
US; L.J. ROSENBERG: "Program controlled I/O
address assignment"**

**IBM TECHNICAL DISCLOSURE BULLETIN, vol.
18, no. 3, August 1975, pages 878-879, New
York, US; E.J. ANNUNZIATA et al.: "Basic
storage module selection check"**

(73) Proprietor: **HONEYWELL BULL ITALIA S.p.A.**
**Via Martiri d'Italia 10**
**I-10014 Calusa (TO) (IT)**

(72) Inventor: **Mantellina, Calogero**
**Via Ventimiglia 11**
**Cerro Maggiore (MI) (IT)**
Inventor: **Zanzottera, Daniele**
**Via Rossini 23**
**Busto Garolfo (MI) (IT)**
Inventor: **Gelmetti, Marco**
**Via Sauli, 18**
**Milano (IT)**

EP 0 080 626 B1

Courier Press, Leamington Spa, England.

## 0 080 626

**Description**

The present invention relates to a memory module selection and reconfiguration apparatus in a data processing system.

Most data processing systems at present used give the opportunity to increase the capacity of the working memory for fulfilling new requirements.

This is commonly obtained by arranging the working memory according to a modular structure, that is by forming it with a variable number of identical memory modules housed into a unit which is designed to contain a certain maximum number of modules. A memory module has a prefixed capacity (for instance 128K bytes) and is generally carried out by a printed circuit board of prefixed sizes and by a certain number of integrated memory components which have already gained a hold upon the market.

A problem, which the manufacturers of data processing systems have to deal with, is to update with a minimum cost the performances offered by the working memory, with regard to its capacity, in function of the quick progress of the electronic technologies.

Owing to such progress new integrated memory components having greater and greater capacity are put on the market.

By using such new components, a memory module may be built which achieves a capacity greater than that one it had (for instance double or quadruple) and, at the same time, maintains unchanged the size of its memory board and its interconnections with the outside.

When this last opportunity occurs, the capacity of a working memory may be increased not only by increasing the number of memory modules, but also by using memory modules of greater capacity without removing necessarily for this reason the reduced capacity modules already installed.

In such a way it is possible to obtain a working memory with a capacity variable as a function of the number and type of modules, and in which modules of different capacity are present at the same time. For so formed working memories there is the problem to address correctly such memories, that is to convert an absolute memory address in a module selection signal and, within the selected module, in a selection address. In other words it is required to prearrange circuits which allow to identify, on the grounds of the memory addresses, one of the several modules constituting the working memory so that the several modules may be addressed as if they constitute an addressable continued space of an only memory.

As in data processing systems processors, working memories and peripheral units are interconnected through busses and as such connecting busses define a common interface for several types of equipments, it is not possible to perform the mentioned address conversion upstream the connecting bus without affecting the interfaces of all the equipments.

Such conversion must therefore occur within the working memory and must be performed with simple and fast circuits so as not to introduce unacceptable delays in the memory access times and to increase the complexity and the related cost of such circuits.

A partial solution to this problem is described in U.S. Patent No. 4,001,786.

According to the mentioned patent a memory unit comprises an ordered plurality of memory modules and each module includes a module selector which receives at its inputs a suitable part of the memory addresses, some signals representative of the capacity of the related module and some signals representative of the sum of the capacities of the modules preceding the considered one. Referring to each module, the related selector comprises a network for summing the capacities of the preceding modules, a register for storing such sum, a network for subtracting the sum contained into such register to the received memory address part, a comparison network for determining if the sign of the subtraction operation is positive, negative or null and, in function of the result, for enabling the selection of the related module.

The proposed solution is partial because it requires a great number of components and therefore results complex and expensive.

Besides the selection of a memory module is conditioned by the joint occurrence of two conditions, say that the address has to be greater than the capacity of the modules preceding the considered one and lesser than the memory capacity given by the sum of the capacity of the preceding modules and by the capacity of the considered module. This requires the execution of a logic AND operation involving a certain delay time which, however short, cannot be avoided and is due to the signal propagation time in the logical circuits.

Even the above mentioned comparison system using first a subtraction operation and then a comparison operation, besides requiring a great number of components, is relatively slow.

These considerations about the speed of the memory module selection are not unrelevant because the selection time heavily affects the memory performances.

At present, once a memory module is selected a read/write cycle develops within a time interval of about 300÷600 nsec.

It is clear that delays in selecting modules, even though they last few tens of nanoseconds, reduce in appreciable way the read/write speed of the memory.

Substantially the same disadvantages are present in the US—A—3,813,652. Such patent discloses a memory address transformation system where a memory comprises a plurality of ordered modules each providing a first binary code indicative of its memory size. A plurality of adders provides a set of second binary codes representing sums of subsequently ordered module sizes.

2

The most significant portion of a memory address received from a CPU is compared with the second binary codes, and the results of such comparison are fed to selector/decoders which depending on the comparison results provide a selection signal to one of the several modules.

Since only a comparator and a selector, cascade connected are involved in the selection of the required module, the apparatus is faster than the one disclosed in US—A—4,001,786 but still complex and expensive.

The disadvantages present in the solutions proposed by the prior art are overcome by the memory module selection and reconfiguration apparatus of the present inventions which has the advantage of using a minimum number of components and the further advantage of introducing minimum selection delays.

According to the invention these advantages are obtained by assigning to the central unit of the system some processing functions to be executed once for all during the initialization or the reconfiguration of the system and by providing the memory with an image of its composition.

Such image is stored in suitable memory register and defines for each memory module the capacity of such module plus the capacity of the preceding modules. A comparator is coupled to each memory module; such comparator receives as inputs the most significant bits of the memory address as well as the memory capacity of the considered module plus that one of the preceding modules.

The comparators check if the memory address is lesser than the related comparison capacities and, depending on the results of such comparison, select through a decoder the proper memory module; besides an "overflow" signal is provided if the memory address exceeds the capacity of the installed working memory.

These and other features of the invention and the related advantages will appear more clearly from the following description of a preferred embodiment of the invention and from the accompanying drawings where:

Fig. 1 shows in block diagram a data processing system including the present invention;

Fig. 2 shows in schematic form the constitution of a memory module;

Fig. 3 shows in schematic form the architecture of the memory control unit in the system of the invention;

Fig. 4 shows the memory module selection unit in the system of the invention.

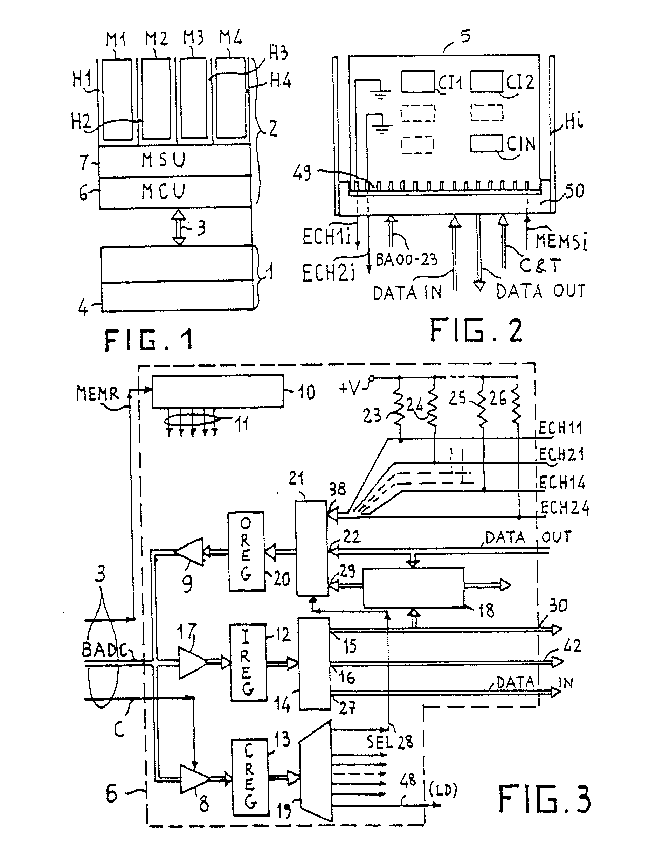

Fig. 1 shows in block form a data processing system using a memory module selector according to the invention.

The system comprises a central unit 1 and a working memory 2 interconnected through a channel 3 constituted by a plurality of leads. Through channel 3 central unit 1 sends to memory 2 timing signals, commands, addresses, data to be written and may receive from memory 2 read data and status information.

Central unit 1 is provided with a control memory 4 to store control microprograms managing its working.

For the purposes of the present invention any additional information about central unit 1 and channel 3 is unnecessary because the invention may be used with any type of central unit and connection channel. Working memory 2 comprises a memory control unit MCU 6, a memory module selector MSU 7 and a plurality of memory modules which may be installed in variable number from one up to a maximum of four ($M_1$, $M_2$, $M_3$, $M_4$) in related ordered housing of a memory frame ($H_1$, $H_2$, $H_3$, $H_4$).

The capacity of each of the memory modules may be selected among different values, that is for instance, 128K words, 256K words, 512K words. It is clear that, according to the number and the capacity of the installed modules, the total capacity of memory 2 may vary from 128K to 2M words per multiples of 128K words with the only exception of the intermediate total capacity of 1920K words.

Each memory module with capacity greater than 128K words, that is 256K and 512K words, may be considered as composed respectively of two and four blocks of unitary capacity 128K, so that the memory may be considered as composed of a plurality of blocks partitioned in one or more modules.

The binary addressing of a word inside a block of 128K words requires 17 bits.

The binary addressing of a word inside a memory space constituted by 2M words requires 21 bits.

Central unit 1 can therefore address a word within memory 2 with a binary code of 21 bits.

However, for a greater generality of description, it is admitted that central unit 1 is able to address with a binary code of 24 bits up to 16M words: this allows for instance to connect central unit 1 to working memories with capacities greater than the one of the here considered memory.

Working memory 2 will therefore receive a binary addressing code of 24 bits.

The less significant 17 bits of such 24 bits allow to identify a memory location within a block while the following most significant 4 bits allow to identify a memory block;

The 3 bits of maximum weight are unused in the described example.

Fig. 2 shows in schematic form a memory module like $M_1$, $M_2$, $M_3$, $M_4$ and the related housing.

The module is substantially constituted by a printed circuit board 5 provided with a connector 49.

Such connector, through a base 50 which is part of housing Hi, in which the module is installed, allows to connect board 5 to other boards constituting memory control unit MCU 6 and memory module selector MSU 7.

Leads for signal transmission are connected to base 50 of memory module board 5; in particular:

two leads ECH1i, ECH2i send from board 5 to control unit MCU 6 a 2 bit binary signal indicative of the capacity of the memory module;

a group of leads BA00—23 receive from control unit MCU 6 a binary addressing code, of which only the less significant bits are used, as already said, in function of the module capacity;

a group of leads DATA IN receive from control unit MCU 6 the binary information to be written into the memory module;

a group of leads DATA OUT send the binary information read out from the memory module from board 5 to control unit MCU 6,

a group of leads C&T receive from control unit MCU 6 timing and command signals;

lead MEMS i receive from module selector MSU 7 a selecting and module enabling signal.

As it is well known in the art, the groups of leads BA00—23, DATA IN, DATA OUT may consist in a single group of leads for bidirectional information transfer. The leads group may be used in different and subsequent time intervals for the bidirectional transfer of addresses and data.

A suitable number of memory integrated circuit packages CI1÷CIN is mounted on board 5. The memory capacity of the module depends on the number of the installed packages and on their capacity.

Leads ECH1i, ECH2i, through connector 49, base 50, are connected or not to ground inside board 5 in function of the memory capacity installed within the module.

However at least one of such leads is connected to ground.

As it will be seen later on, each of leads ECH1i, ECH2i is also connected within control unit MCU 6 to a positive voltage source through a pull-up resistor so that it may be held at electrical/logical level 0 or 1 according to whether it is respectively connected to ground or not within the module.

The electrical/logical levels present on leads ECH1i, ECH2i are indicative of the memory capacity of the module installed into housing Hi.

For example the correspondence between logic levels and capacities may be the one shown in the following table:

| ECH1 | ECH2 | Capacity | |
|------|------|----------|---|
| 1 | 0 | 128K words | |
| 0 | 1 | 256K words | |
| 0 | 0 | 512K words | |
| 1 | 1 | 0 words | (the board is missing and therefore all leads are disconnected from ground). |

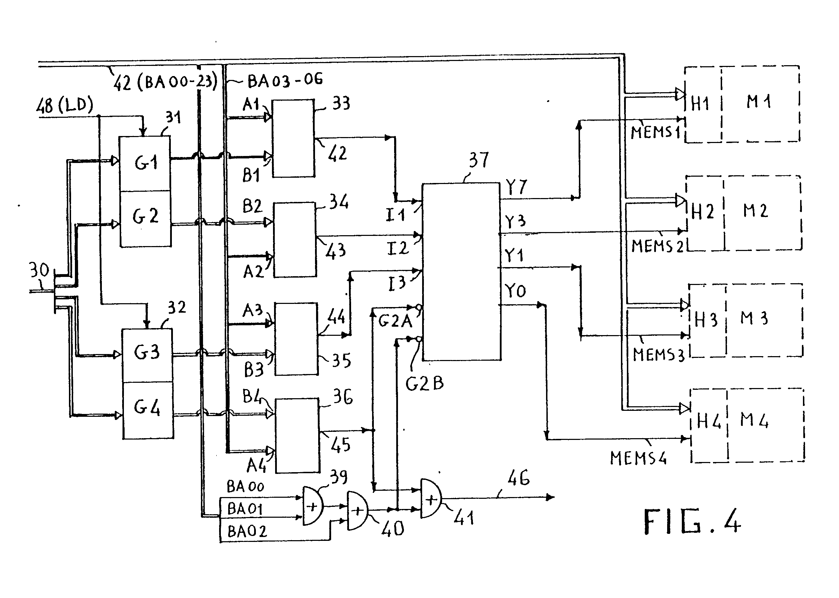

Fig. 3 shows in schematic form the control unit MCU 6 of memory 2. Control unit 6 receives through channel 3 an information set. Channel 3 comprises a certain number or leads, for instance a lead MEMR for sending to memory 2 from central unit 1 a memory access request, a lead C for sending to memory 2 a signal characterizing as a command the information set present on the other leads and a group of leads BADC or bidirectional bus for transferring to/from memory 2 information which may be commands, addresses or data.

This interface structure is merely illustrative of the most recent interface architectures which are used in the data processing systems, but for the invention purposes any else communication interface may be used.

Bus BACD is connected to the inputs of two groups 17, 8 of tristate gates and to the outputs of a group 9 of tristate gates.

Lead MEMR is connected to the enabling input of a timing unit 10 generating on a group of leads 11 timing signals which provide to time the operations performed by the electronic components of module control unit 6.

Lead C is connected to the enabling input of tristate group 8 and enables such group to transfer the information present on bus BACD.

Outputs of tristate groups 17, 8 are connected to the inputs of two registers 12, 13 respectively.

Register 12 acts as input register (I REG) for the information in input to the memory and its outputs are connected to the inputs of a demultiplexer 14 having output groups 15, 16, 27.

Output groups 15 may for instance transfer information to other internal registers 18 of control unit 6, output group 16 transfers addresses to module selection unit 7 and to the several modules and output group 27 transfers to the several modules the imputted data. Register 13 (REG) acts as input register for the commands and its outputs are connected to the inputs of a decoder 19 which generates on its outputs some command signals. Such command signals, in case timed through logic AND operations with the timing signals, are used partially inside control unit 6 for enabling the loading/unloading of registers, the selection of multiplexers/demultiplexer/etc. and partially outside control unit 6 for enabling read/write/ refresh operations in the memory modules.

Tristate group 9 has its inputs connected to the outputs of a register 20 (O REG) which receives as inputs through a multiplexers 21 several information.

An input group 29 of multiplexer 21 is for example connected to the outputs of internal registers 18; an input group 22 is connected to DATA OUT outputs of the several memory modules; an input group 38 is connected to outputs ECH1i, ECH2i of the several memory modules: in particular input group 38 is connected to four pairs of leads (ECH1, ECH21, ..., ECH14, ECH24) which define with their logic levels the capacity of the several memory modules.

Each of such leads is connected to a source of voltage +V through a pull-up resistor, respectively 23, 24,...25, 26.

Control unit 6 is conventional in its structure except for two features. The first feature is that, owing to a command of control unit 1, control unit 6 allows to transfer to the same central unit, through multiplexer 21 and register 20, the signals indicative of the capacities of the several memory modules; particularly, if central unit 1 sends to unit 6 a command for reading the working memory capacity, a suitable selection command is generated on an output of decoder 19.

Such command, through a lead SEL 28, is applied to a selection input of multiplexer 21 and selects input group 38.

The second feature is that control unit 6 allows to transfer information to some registers of module selection unit MSU 7 through register 12, demultiplexer 14 and channel 30. This operation is performed when a suitable command sent by central unit 1 is received; such command, stored into register 13 and decoded by decoder 19, generates on lead 48 a signal LD which enables the loading of suitable registers of module selection unit 7.

Fig. 4 shows in detail the circuital structure of memory module selection unit MSU 7.

Such unit comprises two registers 31, 32 in parallel, each one with capacity of 8 bit, four 4 bit comparators 33, 34, 35, 36, a decoder 37 and three 2 input OR gates 39, 40, 41.

Selection unit 7 is connected to control unit 6 through channel 30, address channel 42 and command lead 48.

The 16 bit channel 30 is connected to the inputs of registers 31, 32. Lead 48 is connected to the enabling input of registers 31, 32. When loading command LD on lead 48 is active, a binary information constituted by four 4 bit groups is loaded into registers 31, 32. The meaning of such four bit groups (G1, G2, G3, G4) will be seen later on.

The outputs of registers 31, 32 corresponding to groups G1, G2, G3, G4 are respectively connected to four 4 bit input groups B1, B2, B3, B4 of comparators 33, 34, 35, 36 respectively.

Each of comparators is provided with a second input group A1, A2, A3, A4 connected to leads BA 03—06 of address channel 42.

Comparators 33, 34, 35, 36 compare the binary code present on inputs Ai with the binary code present on inputs Bi and supply on an output, respectively 42, 43, 44, 45, a signal at logic level 1 respectively for B1>A1, B2>A2, B3>A3, A4>B4.

The comparators are suitably chosen among the devices available on the market as integrated circuits with reduced propagation time. For instance the comparator circuit 74S85 of Texas firm has a maximum signal propagation time from input to output equal to 16,5 nsec and may be suitably used in the present invention.

Comparator 74S85 has three different outputs respectively for signalling with a signal at logic level 1 a comparison result of: A>B, A<B, A=B respectively.

Only one of the outputs of comparator 74S85 has to be used in the invention, as already mentioned.

Outputs 42, 43, 44 are connected to selection inputs I1, I2, I3 of decoder 38.

Decoder 38, available as integrated circuit and marketed by Texas firm with code 74S138, decodes the binary code present on the selection inputs into a signal at logic level 0 on one of 8 output pins Y0,...Y7. Only four of such output pins are used in the present application. The maximum propagation time of decoder 74S138 is of 15 nsec. Such decoder is also provided with two control inputs G2A, G2B.

The logic table giving the working of decoder 74S138 is shown below.

| G2A | G2B | I1 | I2 | I3 | Y0 | Y1 | Y2 | Y3 | Y4 | Y5 | Y6 | Y7 |
|---|---|---|---|---|---|---|---|---|---|---|---|---|
| H | X | X | X | X | H | H | H | H | H | H | H | H |
| X | H | X | X | X | H | H | H | H | H | H | H | H |
| L | L | L | L | L | L | H | H | H | H | H | H | H |
| L | L | L | L | H | H | L | H | H | H | H | H | H |
| L | L | L | H | L | H | H | L | H | H | H | H | H |
| L | L | L | H | H | H | H | H | L | H | H | H | H |
| L | L | H | L | L | H | H | H | H | L | H | H | H |
| L | L | H | L | H | H | H | H | H | H | L | H | H |
| L | L | H | H | L | H | H | H | H | H | H | L | H |
| L | L | H | H | H | H | H | H | H | H | H | H | L |

Symbols L, X, H respectively indicate that the signals present on the inputs/outputs are at electrical/logical level 0, at level 1/0 indifferently and at electrical/logical level 1.

Output 45 of comparator 36 is connected to control input G2A of decoder 37 and to a first input of OR gate 41.

Leads BA 00, BA 01 of address channel 42 are connected to inputs of OR gate 39. Output of OR gate 39 is connected to an input of OR gate 40 whose second input is connected to lead BA 02 of address channel 42.

Output of OR gate 40 is connected to control input G2B of decoder 37 and to second input of OR gate 41.

Output Y7 of decoder 37 is connected, through lead MEMS1 and a socket connector of housing H1, to the corresponding installed module and provides it with a selection signal.

Likewise outputs Y3, Y1, Y0 are respectively connected, through leads MEMS2, MEMS3, MEMS4 and socket connectors of housings H2, H3, H4, to the corresponding installed modules.

The operation of the memory module selection unit and of the whole selection apparatus is very simple.

During the system initialization, central unit 1 sends to memory control unit 6 a command for reading the capacity of the installed working memory.

Owing to such command, central unit 1 receives through multiplexer 21, register 20 and channel 3 the binary codes representative of the memory capacities of each of the modules installed into the available memory housings H1, H2, H3, H4.

Such codes are converted, by using the internal resources of the central unit, into 4-bit codes G1, G2, G3, G4 having the following meaning. :

G1: it represents the capacity of module M1 per multiples of the unitary capacity of 128K words. For instance:

if G1=0000, module M1 is missing;
if G1=0001, the capacity is of 128K words,
if G1=0010, the capacity is of 256K words;
if G1=0100, the capacity is of 512K words.

G2: it represents the sum of the capacities of module M1, M2 per multiples of the unitary capacity of 128K words.

For instance, if the capacity of each of modules M1, M2 is 512K words, it will be G2=1000.
If both modules are missing, it will be G2=0000
For intermediate value of capacity, G2 will have an intermediate binary value.

G3: it represents the sum of the capacities of modules M1, M2, M3 per multiples of the unitary capacity of 128K words.

G3 may have different binary values included between 0000 and 1100.

G4: it represents the sum minus one of the capacities of modules M1, M2, M3, M4 per multiples of the unitary capacity of 128K words.

Because at least one module must be present, G4 may assume different binary values included between 0000 and 1111.

6

Owing to a write command, central unit 1 sends to memory selection unit 7, through channel 3 and memory control unit 6, codes G1, G2, G3, G4 which are loaded into registers 31, 32 by means of command LD. At this point selection unit 7 is ready for selecting the several memory modules. In fact, when the memory is addressed, the addressing bits present on leads BA 00—BA 06 are sent to selection unit 7.

The binary code expressed by such bits represents per multiples of 128K and except for a remainder expressed by bits BA07—23 the memory address.

Bits BA00—BA02 are checked to be equal to 0.

In fact, even if only one of bits BA00—BA02 is equal to 1, it means that the memory address exceeds the maximum memory capacity which may be installed.

This check operation is performed by OR gates 39, 40.

Output of OR gate 40 is at logical level 1 if the above mentioned condition occurs.

However even the installed capacity may be less than the maximum installable capacity. Therefore it needs to check that also bits BA03—BA06 do not express a memory address greater than the installed capacity.

Such check operation is performed by comparator 36.

In fact, if A4 (that is the code expressed by bits BA 03—06) is less than or equal to B4 (condition A4>B4 not verified), this means that the memory address (neglecting the less significant bits) is lesser than or equal to the installed capacity reduced by a unitary capacity of 128K and therefore, even considering the less significant bits, the memory address is lesser than or equal to the installed capacity.

On the contrary, if A4 is greater than B4, this means that the memory address is greater than the installed capacity.

For such condition, output 45 of comparator 36 raises to logic level 1 and, through input G2A, locks at logic level 1 all the outputs of decoder 38.

Besides, through OR gate 41, a memory overflow signal is generated on lead 46; such signal is sent to central unit 1 as error signal through bus 3.

It is clear that the memory overflow condition occurs all the more reason if also only one of bits BA 00, BA 01, BA 02 is at logic level 1.

Supposing that the memory address is less than the installed capacity, the module selection is performed by comparators 33, 34, 35.

In fact, if the compared address part is less than B1, B2, B3, this means that the capacity of the first module exceeds the memory address. In such case output 42, 43, 44 of the comparators will be all at logic level 1 (B1>A1, B2>A2, B3>A3), output Y7 of decoder 37 will be at logic level 0 and will provide with selection signal MEMS1 at logic level 0 memory module M1.

If the condition B1>A1 is not verified but the other conditions are verified, this means that the memory address is greater than the capacity of the first module but not than the sum of the capacities of the first and second module.

For such condition it is easy to notice from the logic table already seen that output Y3 of decoder 37 falls to logic level 0.

Output Y3 is connected to selection input of module M2 and provides to select such module with signal MEMS2 at logic level 0.

Likewise, if conditions B1>A1, B2>A2 are not verified but B3>A3 is verified, this means that memory address is greater than the sum of capacity of first and second module but lower than the sum of first, second and third module.

For such condition it is immediate to notice from the logic table already seen that output Y1 of decoder 37 falls to logic level 0.

Output Y1 is connected to selection input of module M3 and provides to select such module with signal MEMS3 at logic level 0.

Finally, if none of conditions B1>A1, B2>A2, B3>A3 is verified, this means that the memory address is greater than the sum of the capacities of first, second and third module.

For such condition output Y0 of decoder 37 falls to logic level 0.

Output Y0 is connected to the selection input of module M4 and provides to select such module with signal MEMS4 at logic level 0.

Therefore, except for the memory overflow condition when an error signal is generated, selection unit 7 provides to send a selection signal to the proper module with a maximum delay not greater than 30÷31 ns since it receive the address bits.

The circuital structure of the selection unit of the invention is particularly simple and unexpensive because all the logic sum and subtraction networks, used inside the selection units known in the art, are no more required.

In the present invention the operations for computing the installed capacity are assigned to the central unit and are performed once for all during the system initialization or during a possible memory reconfiguration due to addition/removal/substitution of memory modules, as well as whenever this may be suitable, as for instance when during the system operation a memory module is recognized to be failed or misfunctioning. In such last case, even if the faulty module is physically left in the memory, it may be logically excluded by the central unit which assign to it a memory capacity 0.

This involves a logic memory reconfiguration which allows to define by means of the module selection

7

# 0 080 626

unit a continue memory space constituted by the working modules preceding the faulty module and by the working modules following the faulty module.

Of course the above memory reconfiguration is also valid if several modules are faulty at the same time.

In the invention a peculiar artifice is used, that is comparisons are performed between the capacities of the installed memory modules and the most significant bits of the memory address and another comparison is performed between the memory capacity minus a unitary capacity (equal to the maximum capacity addressable by means of the less significant address bits which are not used in the comparison operation) and the most significant bits of the memory address.

The above artifice allows to reduce to a minimum the parallelism of the comparators.

Besides the memory modules may be inserted in an absolutely casual way, also leaving empty intermediate positions.

## Claims

1. Memory module selection and reconfiguration apparatus in a data processing system comprising at least a central processing unit (1) and a modular working memory (2) interconnected through a communication bus (3) and wherein said working memory includes a memory control unit (6) and may house into each of n ordered housings (H1, H2, H3, H4) a module (M1, M2, M3, M4) with memory capacity equal to or multiple of a minimum capacity, and wherein first means (23, 24, 25, 26, ECH1i, ECH2i) in said memory control unit and in each of the modules installed into said housing, generate a plurality of first binary codes, one code for each housing, each of said first codes being representative of the memory capacity of the module installed in the related housing or of the missing of installed module, and wherein second means (17, 12, 14) in said memory control unit receives from said central processing unit through said communication bus memory addresses, data and a control information set, the apparatus further comprising a memory module selector (7) including a plurality of comparators and receiving a prefixed portion of said memory addresses and codes representing sums of module capacities, characterized by that it comprises:

— third means (21, 20, 9) in said memory control unit, controlled by a control information, received from said central processing unit, for transferring said first binary codes through said communication bus to said central processing unit,

— said memory module selector (7) having:

. inputs connected to outputs of said second means, receiving said prefixed portion of said memory addresses and second binary codes, each representative of the memory capacity cumulative of the modules installed into a related housing and into the orderly preceding housings, said second binary codes, being provided by said central processing unit, as a result of computation performed on said received first binary codes,

. a plurality of registers (31, 32) one register for each memory housing, controlled by a control information received from said central processing unit, each for storing a related one of said second binary codes,

. said plurality of comparators (33, 34, 35, 36), one comparator for each memory housing, each of said comparators having first inputs to receive said prefixed portion of memory addresses, and second inputs connected to the output of a corresponding one of said registers, to receive the second binary code related to the corresponding memory housing, each of said comparators providing as output a binary signal indicative of the comparison performed between the second binary code and said memory address portion received as inputs, and

. a decoder (37) provided with inputs for receiving said binary signal from each of said comparators and with a plurality of outputs, each of said outputs being coupled to one of said housing, said decoder providing on a selected one of said outputs and in function of said binary signals received from said comparators, a module selection signal, said module selection signal being received by a selection input of the module installed into the related housing.

2. Data processing system as claimed in claim 1 wherein, indicating with Gi each of said second binary codes, indicating with Si the memory capacity installed into each of said housings and indicating with B said minimum capacity and with n the housing number, said second binary codes are given by the expression:

$$Gi = \sum_{1}^{i} Si \quad \text{with } i = 1, \dots n-1$$

and by:

$$Gn = \left( \sum_{1}^{n} Si \right) - B$$

8

# 0 080 626

**Patentansprüche**

1. Speichermodulauswahl- und Rekonfigurationseinrichtung in einem Datenverarbeitungssystem mit wenigstens einer zentralen Recheneinheit (1) und einem modularen Arbeitsspeicher (2), die über einen Kommunikationsbus miteinander verbunden sind und wobei der Arbeitsspeicher eine Speichersteuereinheit (6) umfaßt und in jedem von n geordneten Gehäusen (H1, H2, H3, H4) einen Modul (M1, M2, M3, M4) enthält, dessen Kapazität gleich einer Mindestkapazität oder einem Vielfachen hiervon ist;

wobei erste Einrichtungen (23, 24, 25, 26; ECH1i, ECH2i) in der Speichersteuereinheit und in jedem der Module mehrere erste Binärcodes, und zwar je einen Code für jedes Gehäuse, erzeugen, der kennzeichnend ist für die Speicherkapazität des im betreffenden Gehäuse befindlichen Moduls oder für das Fehlen eines Moduls;

wobei zweite Einrichtungen (17, 12, 14) in der Speichersteuereinheit über den Kommunikationsbus von der zentralen Recheneinheit Speicheradressen, Daten und einen Satz von Steuerinformationen empfangen;

und wobei die Speichermodulauswahl- und Rekonfigurationseinrichtung eine mehrere Vergleicher aufweisende Speichermodul-Auswahlschaltung (7) umfaßt, die einen vorgegebenen Teil der genannten Speicheradressen sowie die Summe der Modulkapazitäten kennzeichnende Codes empfängt, dadurch gekennzeichnet, daß die Speichermodulauswahl- und Rekonfigurationseinrichtung in der Speichersteuereinheit dritte Einrichtungen (21, 20, 9) umfaßt, die durch von der zentralen Recheneinheit gelieferte Steuerinformationen gesteuert werden, um die ersten Binärcodes über den Kommunikationsbus zur zentralen Recheneinheit zu übertragen;

daß die Speichermodulauswahlschaltung (7) an die Ausgänge der zweiten Einrichtungen angeschlossene Eingänge aufweist, welche den genannten Teil der Speicheradresse sowie zweite Binärcodes empfangen, welche die kumulativ die Speicherkapazität der in einem zugeordneten Gehäuse untergebrachten Module sowie der in der Reihenfolge vorangehenden Gehäuse darstellt, wobei die zweiten Binätcodes als Rechenergebnis der Verarbeitung der empfangenen ersten Binärcodes von der zentralen Recheneinheit geliefert werden;

daß zur Speicherung der zugeordneten zweiten Binärcodes für jedes Speichergehäuse eines von mehreren Registern (31, 32) vorgesehen ist und diese Register durch von der zentralen Recheneinheit erhaltene Steuerinformationen gesteuert werden;

daß für jedes Speichergehäuse einer von mehreren Vergleichern (33, 34, 35, 36) vorhanden ist, von denen jeder erste Eingänge zum Empfang des vorgegebenen Teils der Speicheradresse sowie an den Ausgang eines entsprechenden Registers angeschlossene zweite Eingänge aufweist für den Empfang des dem betreffenden Speichergehäuse zugeordneten zweiten Binärcodes, und wobei jeder der Vergleicher als Ausgangssignal ein Binärsignal liefert, das aus dem Vergleich des zweiten Binärcodes mit dem genannten als Eingangssignal empfangenen Speicheradressteil hervorgegangen ist;

daß ein Decoder (37) Eingänge zum Empfang des Binärsignals von jedem der Vergleicher sowie mehrere Ausgänge aufweist, von denen jeder an eines der Gehäuse angeschlossen ist und der Decoder auf einem ausgewählten Ausgang als Funktion der von den Vergleichern empfangenen Binärsignale ein Modulauswahlsignal liefert, das an einem Auswahleingang des in dem betreffenden Gehäuse befindlichen Moduls empfangen wird.

2. Datenverarbeitungseinrichtung nach Anspruch 1, bei der die zweiten Binärcodes durch den Ausdruck

$$G_i = \sum_{1}^{i} S_i \text{ mit } i=1,\ldots n-1$$

sowie

$$G_n = \left(\sum_{1}^{n} S_i\right) - B$$

definiert sind, wobei $G_i$ einen der zweiten Binärcodes, $S_i$ die Speicherkapazität im betreffenden Gehäuse, B die Minimalkapazität und n die Gehäusezahl ist.

**Revendications**

1. Dispositif de sélection et de reconfiguration de modules de mémoire dans un système de traitement de données comprenant au moins une unité centrale de traitement (1) et une mémoire de travail modulaire (2) interconnectées par un bus de transmission (3) et dans lequel la mémoire de travail modulaire (2) interconnectées par un bus de transmission (3) et dans lequel la mémoire de travail inclut une unité de commande de mémoire (6) et peut loger dans chacun d'un ensemble de n logements ordonnés (H1, H2, H3, H4) un module (M1, M2, M3, M4) de capacité de mémoire égale à ou multiple d'une capacité minimale, et dans lequel des premiers moyens (23, 24, 25, 26, ECH1i, ECH2i) dans l'unité de commande de mémoire et

9

dans chacun des modules placés dans le logement, engendrent un ensemble de premiers codes binaires dont un code pour chaque logement, chacun des premiers codes étant représentatif de la capacité de mémoire du module placé dans le logement relatif ou de l'absence du module placé, et dans lequel des deuxièmes moyens (17, 12, 14) inclus dans l'unité de commande de mémoire reçoivent de l'unité centrale de traitement par le bus de transmission, des adresses, des données et un groupe d'informations de commande, le dispositif comprenant en outre un sélecteur de modules de mémoires (7) incluant un ensemble de comparateurs et recevant une partie prédéterminée des adresses de mémoire et des codes représentant des sommes de capacités de modules, caractérisé en ce qu'il comprend:

— des troisièmes moyens (21, 20, 9) inclus dans l'unité de commande de mémoire, commandés par une information de commande, reçue de l'unité centrale de traitement, pour transférer les premiers codes binaires par le bus de transmission jusqu'à l'unité centrale de traitement,

— le sélecteur de modules de mémoire (7) comportant:

— des entrées connectées aux sorties des deuxièmes moyens, recevant la partie prédéterminée des adresses de mémoire et des deuxièmes codes représentant chacun la capacité de mémoire cumulative des modules placés dans un logement relatif et dans les logements le précédant dans l'ordre, les deuxièmes codes binaires étant fournis par l'unité centrale de traitement comme résultat d'un calcul effectué sur les premiers codes binaires reçus,

— un ensemble de registres (31, 32) dont un registre pour chaque logement de mémoire, commandés par une information de commande reçue de l'unité centrale de traitement, chacun servant à mémoriser un code relatif parmi les deuxièmes codes binaires,

— l'ensemble des comparateurs (33, 34, 35, 36) dont un comparateur pour chaque logement de mémoire, chacun des comparateurs comportant des premières entrées pour recevoir la partie prédéterminée des adresses de mémoire, et des deuxièmes entrées connectées à la sortie d'un registre correspondant desdits registres, pour recevoir le deuxième code binaire relatif au logement de mémoire correspondant, chacun des comparateurs fournissant comme signal de sortie un signal binaire indicatif de la comparaison effectuée entre le deuxième code binaire et la partie d'adresse de mémoire reçue à ses entrées, et

— un décodeur (37) pourvu d'entrées pour recevoir le signal binaire de chacun des comparateurs et d'un ensemble de sorties, chacune des sorties étant couplée à un des logements, le décodeur fournissant à une sortie sélectionnée parmi les sorties et en fonction des signaux binaires reçus des comparateurs, un signal de sélection de module, le signal de sélection de module étant reçu par une entrée de sélection du module placé dans le logement relatif.

2. Système de traitement de données selon la revendication 1, dans lequel, en indiquant par Gi chacun des deuxièmes codes binaires, en indiquant par Si la capacité de mémoire en place dans chacun des logements et en indiquant par B la capacité minimale et par n le nombre de logements, les deuxièmes codes binaires sont donnés par l'expression:

$$Gi = \sum_{1}^{i} Si \quad \text{avec } i = 1, \ldots, n-1$$

et par:

$$Gn = \left( \sum_{1}^{n} Si \right) - B.$$

FIG. 1

FIG. 2

FIG. 3

FIG.4